# EUROPEAN PATENT SPECIFICATION

(11) **EP 1 978 586 B1**
(45) Date of publication and mention of the grant of the patent: **24.06.2009**
(21) Application number: 08006684.8
(22) Date of filing: 01.04.2008
(51) Int. Cl.: H01M 8/04

(54) **vehicle with fuel cell and power storage means and control of water scavenging process upon shut-down**
Fahrzeug mit Brennstoffzelle und Speicherbatterie und Steuerung des Entwässerungsprozesses bei Betriebsstop
véhicule avec pile à combustible et accumulateur d'énergie et contrôl de drainage pendent l'arrêt

(30) Priority: 03.04.2007 JP 2007097363
(43) Date of publication of application: 08.10.2008
(73) Proprietor: HONDA MOTOR CO., LTD., Tokyo 107-8556 (JP)
(72) Inventor: Wake, Chihiro, Wako-shi Saitama, 351-0193 (JP); Ojima, Kuniaki, Wako-shi Saitama, 351-0193 (JP)
(74) Representative: Prechtel, Jörg

(56) References cited:
- WO-A-20/06057134
- JP-A- 2007 141 812

## Description

This application is based on and claims the benefit of priority from Japanese Patent Application No. 2007-097363, filed on 3 April 2007.

### BACKGROUND OF THE INVENTION

### Field of the Invention

This invention relates to a moving apparatus. More specifically, it is related to a moving apparatus that moves using the electric power generated by the fuel cell.

### Related Art

Recently, fuel cell systems have drawn attention as a new power source for automobiles. The fuel cell system includes, for example, a fuel cell that generates electric power through a chemically reaction of reactant gas, a reactant gas supplying device supplying the reactant gas to the fuel cell via a reactant gas flow channel and a control device that controls the reactant gas supplying device.

The automobile is provided with a motor that drives the wheels. The electric power generated by the fuel cell system drives the motor so that the automobile is driven.

In addition, the electric power that is generated by the fuel cell is stored in an electric storage device such as a battery or capacitor. When the generation of power by the fuel cell stops because of failure of the fuel cell (hereinafter referred to as fuel cell failure), the automobile is driven by driving the motor using the electric power stored in the electric storage device (hereinafter referred to as EV running)(See Japanese Unexamined Patent Application Publication, No. H09-98511).

The fuel cell has, for example, a stack structure in which several tens to several hundreds of cells are laminated. Here, each cell includes a pair of plates that sandwiches the membrane electrode assembly (MEA). The MEA includes an anode (positive electrode) and a cathode (negative electrode) that sandwich the solid state polymer electrolyte membrane.

The electric power generation occurs as the result of an electrochemical reaction by supplying hydrogen gas to the anode as a reactant and air including oxygen gas to the cathode as a reactant.

When the above described fuel cell system is left in a low temperature atmosphere after stopping the power generation, the moisture content in the fuel cell system condenses and freezes to form ice. Consequently, there was the problem in which, when the fuel cell system was restarted, the ice that adhered in the reactant gas flow channel blocks the flow of the reactant gas so that the power generation performance was reduced.

To solve this problem, there is a method in which monitoring equipment that is driven by the battery is configured to monitor the fuel cell after stopping the fuel cell system and when the fuel cell temperature becomes low, a high flow rate of dry air is sent into the reactant gas flow channel by operating the reactant gas supplying device using the power of an electric storage device in order to blow out the moisture content that adhered in the reactant gas flow channel (herein after referred to as liquid droplet removal scavenge )(See Japanese Unexamined Patent Application Publication No. 2001-307757). According to this method, the moisture content in the reactant gas flow channel is removed to prevent ice formation in the channel, whereby the fuel cell system can smoothly restart.

In addition, there is a method by which a small amount of dry air is sent into the reactant gas flow channel during a long period in order to dry the reactant gas flow channel, and hence to improve the performance of the fuel cell (hereinafter referred to as dry scavenge)(See Japanese Unexamined Patent Application Publication No. 2005-141940).

However, as described above, in a case where the fuel cell failure has occurred, the automobile runs by switching the motor driving source to the electric storage device, and after finishing this EV running, the liquid droplet removal scavenge and the dry scavenge are performed by the power of the electric storage device. Then, among the electric power that is stored in the electric storage device, the portion of the electric power available for the EV running is limited because it needs to ensure the necessary power for the scavenge.

### SUMMARY OF THE INVENTION

An object of the present invention is to provide a fuel cell moving apparatus that can extend the travel distance by the power storage means when fuel cell failure has occurred.

The moving apparatus of the present invention is a moving apparatus (e. g., a fuel cell vehicle 1) having: a moving body that is movable by a drive of the driving means (e. g., the driving motor 2); a fuel cell (e. g., the fuel cell 10) that generates electric power by reacting a reactant gas; a power storage means (e. g., the battery 11) for storing the electric power and a control means (e. g., the control device 30) for controlling the moving body, the fuel cell and the power storage means, in which the control means includes: a fuel cell driving means (e. g., the fuel cell power driving portion 31) for driving the driving means using the electric power that is generated by the fuel cell; a stored power driving means (e. g., the stored power driving portion 32) for driving the driving means using the stored power, the stored power is at least one portion of generated electric power by the fuel cell stored in the power storage means; in which the control means further includes; a power generation continuation judgment means (e. g., the power generation continuation judgment portion 33) for judging whether power generation continuation by the fuel cell is possible or not; a liquid droplet removal scavenge means (e. g., the liquid droplet removal scavenge portion 34) for removing liquid droplet in a reactant gas flow channel by circulating scavenge gas in the channel and a dry scavenge means (e. g., the dry scavenge portion 35) for drying the reactant gas flow channel by circulating the scavenge gas in the channel, and in which during the period of moving of the moving body by the fuel cell driving means, the power generation continuation judgment means judges whether the power generation continuation of the fuel cell is possible or not, and in a case where the power generation continuation of the fuel cell is judged to be possible, the fuel cell continues power generation, and after finishing the moving of the moving body, a scavenge is performed by the liquid droplet removal scavenge means and the dry scavenge means, and in a case where power generation continuation of the fuel cell is judged to be impossible, the power generation by the fuel cell is stopped and the moving body is moved by the stored power driving means and the scavenge is performed by the liquid droplet removal scavenge means.

According to the present invention, when continued power generation by the fuel cell is judged to be possible, a scavenge is performed by both the liquid droplet removal scavenge means and the dry scavenge means. On the other hand, when the continued power generation is judged to be impossible because of the occurrence of fuel cell failure, scavenge is performed by the liquid droplet removal scavenge means. That indicates a different scavenge method is adopted when the power generation is possible or impossible. Accordingly, when the fuel cell failure has occurred, the power otherwise used for the dry scavenge means can be used for the move of the moving body so that the travel distance of the moving body by the power storage means can be extended.

It is preferable, in this case, that the stored power detection means (e.g., the voltage sensor 112) that detects the stored power of the power storage means is provided, in which the control means includes the scavenge power calculation means that calculates the necessary power to operate the liquid droplet removal scavenge means. It is also preferable that the lower limit of the power is set to be the threshold value that can be drawn from above described storage means for the move of above described moving body and according to the stored power detected by the stored power detection means and the scavenge power, during the move of the moving body, the threshold value is set in order to ensure at least the necessary power to operate the liquid droplet removal scavenge means.

According to the present invention, during the move of the moving body, at least the necessary power for the liquid droplet removal scavenge is assured so that the scavenge can be performed even in a case where the fuel cell failure has occurred.

It is preferable, in this case, that the temperature detection means (e.g., the temperature sensor 111) that detects the temperature of the power storage means is provided and that the control means changes the threshold value based on the detected temperature by the temperature detection means.

When the temperature of the storage means becomes low, the power that can be drawn from the power storage means reduces.

According to the present invention, the threshold value is changed based on the temperature of the power storage means that is detected by the temperature detection means, e.g., the threshold value is set low when the temperature of the storage means is low so that the stored power is utilized effectively.

It is preferable in this case that the control means allows the moving of the moving body by the stored power driving means until the stored power that is detected by the stored power detection means reaches the threshold value.

According to the present invention, as the moving of the moving body by the stored power driving means is allowed until the stored power that is detected by the stored power detection means reaches the threshold value, the moving body can move as long a distance as possible by assuring the necessary power for the scavenge after finishing the moving of the moving body.

According to the present invention, when the continued power generation by the fuel cell is judged to be possible, the scavenge is performed by both the liquid droplet removal scavenge means and the dry scavenge means. On the other hand, when the continued power generation is judged to be impossible because of the occurrence of the fuel cell failure, the scavenge is performed by the liquid droplet removal scavenge means. This indicates that the different scavenge method is adopted when the power generation by fuel cell is possible or impossible. Accordingly, when the fuel cell failure has occurred, the power otherwise used for the dry scavenge means is used for the moving of the moving body so that the travel distance of the moving body by the storage means can be extended.

### BRIEF DESCRIPTION OF THE DRAWINGS

Figure 1 is a block diagram of a fuel cell vehicle in which the moving apparatus of the first embodiment of the present invention is adapted;
Figure 2 is a block diagram of the control means of the moving apparatus related to the embodiment;
Figure 3 is a diagram showing the relation between the degree of scavenge implementation and the necessary electric power for the completion of the scavenge in relation to the moving apparatus of the embodiment;
Figure 4 is a diagram showing the relation between the status of the moving apparatus and the threshold of the power storage means in relation to the embodiment;
Figure 5 is a graph showing the relation between the temperature and the threshold of the power storage means in relation to the embodiment of the invention;
Figure 6 is a flow chart of the operation of the moving apparatus related to the embodiment;
Figure 7 is a timing chart starting from the ignition off until the scavenge completion when fuel cell failure has not occurred in relation to the moving apparatus of the embodiment;
Figure 8 is a timing chart starting from the ignition off until the scavenge completion when fuel cell failure has occurred in relation to the moving apparatus of the embodiment;
Figure 9 is a flow chart of the operation of the moving apparatus in relation to the second embodiment of the present invention; and
Figure 10 is a flow chart of the operation of the moving apparatus in relation to the third embodiment of the present invention.

### DETAILED DESCRIPTION OF THE INVENTION

Hereafter, each preferred embodiment of the present invention is described based on the figures. In the description of the preferred embodiments and its alternatives, the same structural elements have the same sign and a description is omitted or simplified.

### First Embodiment

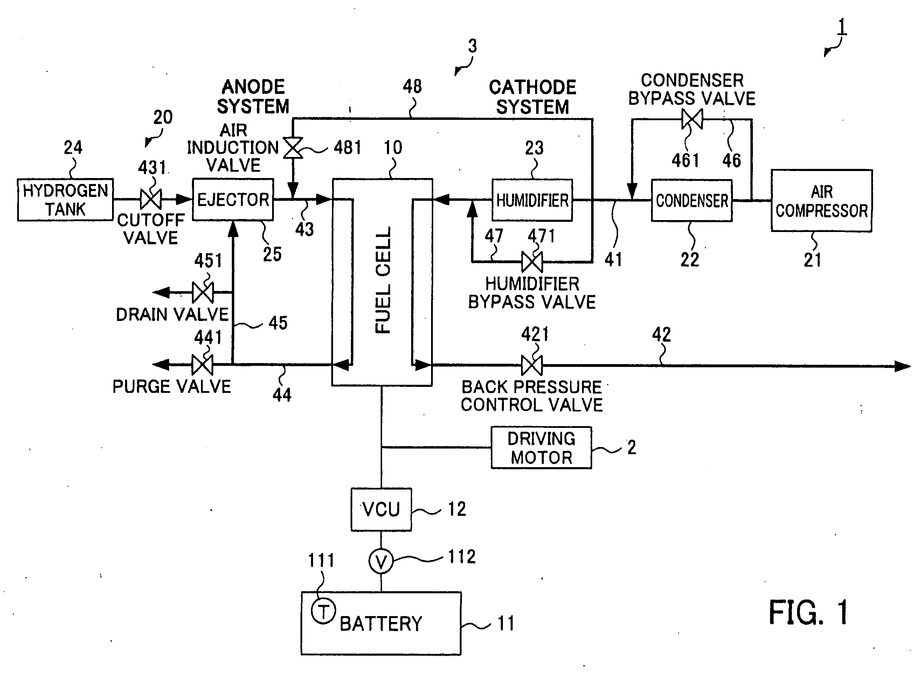

Figure 1 shows a block diagram of a fuel cell vehicle 1 as the moving apparatus of the first embodiment of the present invention.

The fuel cell vehicle 1 includes a moving body (not shown in the figure) that can move by driving a drive motor 2 as the driving means and a fuel cell system 3 that is mounted to the moving body.

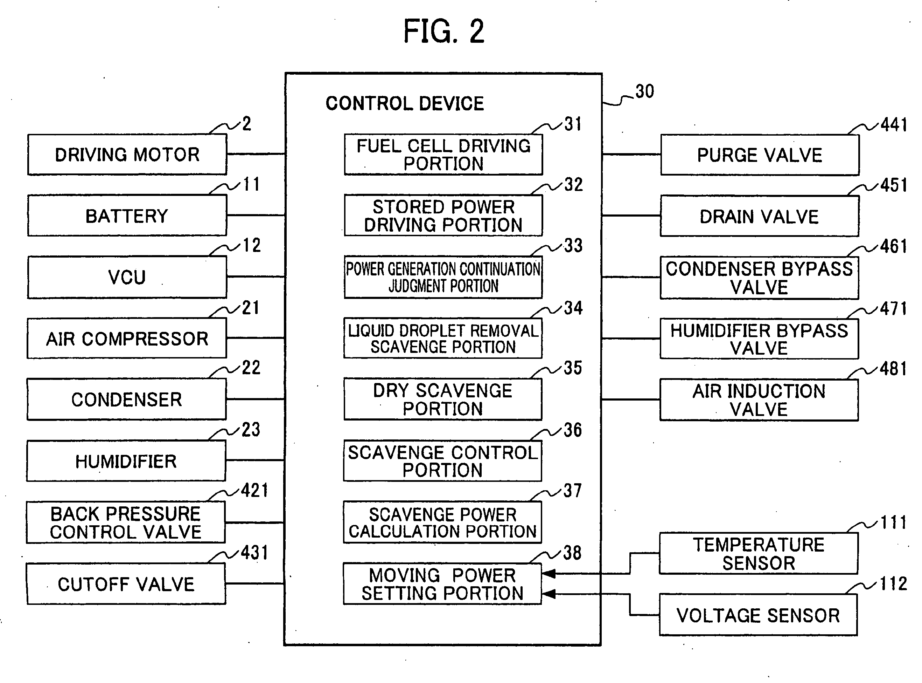

The fuel cell system 3 includes a fuel cell 10 that generates electric power by reacting reactant gas; a supplying device 20 that supplies hydrogen gas and air to a fuel cell 10; a battery 11 as the storage means that can store the electric power; and a control device 30 (see figure 2) as the control means that controls the fuel cell 10, the supplying device 20, and the battery 11.

The fuel cell 10 generates the electric power by a electrochemical reaction when the hydrogen gas is supplied to the anode (positive electrode) and the air including oxygen is supplied to the cathode (negative electrode).

The supplying device 20 includes an air compressor 21, a condenser 22, and a humidifier 23 that supply the air to the cathode side of the fuel cell 10; and a hydrogen tank 24 and an ejector 25 that supply the hydrogen gas to the anode side thereof.

The air compressor 21 is connected to the cathode side of the fuel cell 10 via the air supply channel 41. The condenser 22 and the humidifier 23 are provided in the air supply channel 41.

The air compressor 21 supplies the air to the air supply channel 41. Then the supplied air is cooled by the condenser 22 and afterwards humidified by the humidifier 23, and then supplied to the fuel cell 10.

The upstream and the downstream of the condenser 22 in the air supply channel 41 are connected by a condenser bypass 46. A condenser bypass valve 461 is provided in the condenser bypass 46.

The upstream and the downstream of the humidifier 23 in the air supply channel 41 are connected by a humidifier bypass 47. A humidifier bypass valve 471 is provided in the humidifier bypass 47.

An air discharge channel 42 is connected at the cathode side of the fuel cell 10 and a back pressure control valve 421 is provided at the end of the air discharge channel 42.

The hydrogen tank 24 is connected to the anode side of the fuel cell 10 via the hydrogen supply channel 43. The ejector 25 is provided in this hydrogen supply channel 43. A cutoff valve 431 is provided between the hydrogen tank 24 and the ejector 25 in the hydrogen supply channel 43.

The air supply channel 41 and the hydrogen supply channel 43 are connected by a bypass 48. More specifically, the one end of the bypass 48 is connected to the air supply channel 41 at the point between the condenser 22 and the humidifier 23, and the other end is connected to the hydrogen supply channel 43 at the anode side of the ejector 25. An air induction valve 481 is provided in the bypass 48.

A hydrogen discharge channel 44 is connected to the anode side of the fuel cell 10 and a purge valve 441 is provided at the end of the hydrogen discharge channel 44. At the anode side of the purge valve 441 of the hydrogen discharge channel 44, the hydrogen discharge channel 44 is branched, providing a hydrogen reflux channel 45, in which the hydrogen reflux channel 45 is connected to the ejector 25. A drain valve 451 is provided midstream of the hydrogen reflux channel 45.

The ejector 25 collects, via the hydrogen reflux channel 45, the hydrogen gas that flows in the hydrogen discharge channel 44, and refluxes to the hydrogen-supply channel 43.

The fuel cell 10 is connected to the battery 11 via a voltage control unit (VCU) 12 and the driving motor 2.

The electric power that is generated by the fuel cell 10 is supplied to the battery 11 and the driving motor 2. The voltage control unit 12 limits the output power of the fuel cell 10 according to requirements, and supplies the power to the driving motor 2 and the battery 11.

The battery 11 stores the electric power that is generated by the fuel cell 10 when the voltage of the battery 11 is lower than that of the output voltage of the fuel cell 10. On the other hand, the battery 11 supplies the power to the driving motor 2 according to the requirement to assist the driving of the driving motor 2.

On the battery 11, a temperature sensor 111 as the temperature detection means that detects the temperature of the battery 11 and a voltage sensor 112 as the stored power detection means that detects the stored power of the battery 11 are provided.

Figure 2 is a block diagram of the control device 30.

The control device 30 controls the driving motor 2, the battery 11, the voltage control unit 12, the air compressor 21, the condenser 22, the humidifier 23, the back pressure control valve 421, the cutoff valve 431, the purge valve 441, the drain valve 451, the condenser bypass valve 461, the humidifier bypass valve 471 and the air induction valve 481. In addition, the temperature sensor 111 and the pressure sensor 121 are connected to the control device 30.

The control device 30 includes; a fuel cell power driving portion as the fuel cell power driving means; a stored power driving portion 32 as the stored power driving means; a power generation continuation judgment portion 33 as the power generation continuation judgment means; a liquid droplet removal scavenge portion 34 as the liquid droplet removal scavenge means; a dry scavenge portion 35 as the dry scavenge means; a scavenge control portion 36; a scavenge power calculation portion 37 as the scavenge power calculation means; and a moving power setting portion 38, and makes the fuel cell generate the electric power by driving the supplying device 20.

The procedure to make the fuel cell 10 generate electric power is as follows.

More specifically, the purge valve 441, the drain valve 451, the condenser bypass valve 461, the humidifier bypass valve 471 and the air induction valve 481 are kept closed and the cutoff valve 431 open. Then, the hydrogen gas is supplied to the anode side of the fuel cell 10 via the hydrogen supply channel 43 from the hydrogen tank 24. In addition, the air is supplied to the cathode side of the fuel cell 10 via the air supply channel 41 by driving the air compressor 21.

The supplied hydrogen gas and the air to the fuel cell 10 is used for the electric power generation, and then flows into the hydrogen discharge channel 44 and the air discharge channel 42 together with the residual water including the generated water at the anode side from the fuel cell 10. Since the purge valve 441 and the drain valve 451 are closed, the hydrogen gas that flows into the hydrogen discharge channel 44 refluxes to the ejector 25 via the hydrogen reflux channel 45 and reused.

Afterwards, by opening the purge valve 441, the drain valve 451 and the back pressure control valve 421 at the appropriate degree of opening, the hydrogen gas, the air and the residual water are discharged from the hydrogen discharge channel 44 and the air discharge channel 42.

The fuel cell power driving portion 31 drives the driving motor 2 using the power that is generated by the fuel cell 10.

The stored power driving portion 32 stores at least a portion of the power that is generated by the fuel cell 10 in the battery 11 and drives the driving motor 2 using this stored power.

The power generation continuation judgment portion 33 judges whether the power generation continuation of the fuel cell 10 is possible or not. More specifically, the power generation continuation judgment portion judges whether it is impossible to continue the generation by the fuel cell 10 during the fuel cell failure, for example, when a failure of the fuel cell 10 has occurred and on the other hand, it judges whether it is possible to continue the generation by the fuel cell 10 when an abnormality of the fuel cell 10 is not detected.

The liquid droplet removal scavenge portion 34 performs the scavenge process to remove liquid droplets in the channels by circulating the scavenge gas in the air supply channel 41, the air discharge channel 42, the hydrogen supply channel 43, the hydrogen discharge channel 44 and the hydrogen reflux channel 45 that are the air and the hydrogen flow channels. More specifically, the moisture content in the channels is removed by circulating a large flow rate of scavenge gas in a short time.

The dry scavenge portion 35 performs the scavenge process to dry the channels by flowing the scavenge gas in the air supply channel 41, the air discharge channel 42, the hydrogen supply channel 43, the hydrogen discharge channel 44 and the hydrogen reflux channel 45 that are the air and the hydrogen flow channels. More specifically, compared to the liquid droplet removal scavenge portion 34, the dry scavenge portion circulates a smaller amount of scavenge gas during a long period to dry the inside of the channels. The energy consumption of this dry scavenge portion 35 is larger than the energy consumption of the liquid droplet removal scavenge portion 34.

More specifically, the operation of the supplying device 20 during the scavenge process is as follows.

That is, the air induction valve 481 is closed and the back pressure control valve 421, the condenser bypass valve 461 and the humidifier bypass valve 471 are opened, and then the air compressor 21 is driven. Then, the air that is supplied from the air compressor 21 as the scavenge gas is circulated by passing the air supply channel 41, the condenser bypass 46, the humidifier bypass 47, the cathode side of the fuel cell 10, and is discharged to the outside via the air discharge channel 42 (cathode scavenge).

In addition, from this state, when the drain valve 451; the cutoff valve 431 and the back pressure control valve 421 are closed and the purge valve 441 and the air induction valve 481 are opened, the scavenge gas flows from the air supply channel 41 into the bypass 48, and is discharged to the outside via the hydrogen supply channel 43, the anode side of the fuel cell 10, the hydrogen return channel 45 and the hydrogen discharge channel 44 (anode scavenge).

With the procedure as described above, the air supply channel 41, the air discharge channel 42, the hydrogen supply channel 43, the hydrogen discharge channel 44, and the hydrogen reflux channel 45 are scavenged.

The scavenge control portion 36, during the period of moving of the moving body by the fuel cell power driving portion 31, judges whether the power generation continuation of the fuel cell 10 is possible or not using the power generation continuation judgment portion 33. When the continued power generation by the fuel cell 10 is judged to be possible, the fuel cell 10 continues the power generation and the scavenge is performed by the liquid droplet removal scavenge portion 34 and the dry scavenge portion 35 after finishing the moving of the moving body.

More specifically, the scavenge control portion 36 starts the monitoring of the temperature of the fuel cell 10 when the ignition is turned off and performs the scavenge when the temperature of the fuel cell system 3 reaches as low as near 0°C.

On the other hand, when the continued power generation by the fuel cell 10 is judged to be impossible, the power generation of the fuel cell 10 is stopped, the moving body is moved by using the stored power driving portion 32 and the scavenge is performed by the liquid droplet removal scavenge portion 34.

In this case, immediately upon the residual power of the battery 11 reduces until the residual power becomes equal to the consumption power of the liquid droplet removal scavenge portion 34 or when the ignition is turned off, the liquid droplet removal scavenge is performed using the power of the battery 11. This is, by performing the scavenge in the relatively high battery temperature status just after the running, to avoid the reduction of the retrievable power according to the temperature decrease.

The scavenge power calculation portion 37 calculates the scavenge power necessary to operate the liquid droplet removal scavenge portion 34 and the dry scavenge portion 35.

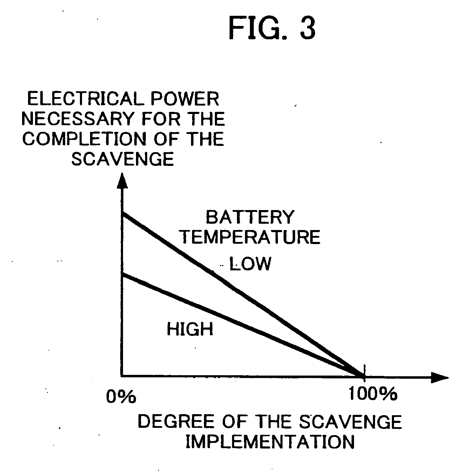

In addition, the scavenge power calculation portion 37 calculates the necessary power from the start of the scavenge to the completion of the scavenge according to figure 3.

Figure 3 shows the relation between the degree of scavenge implementation and the necessary electric power for the completion of the scavenge.

As shown in figure 3, when the degree of the scavenge implementation approaches 100%, the electric power necessary for the completion of the scavenge becomes smaller. Furthermore, when the battery temperature is low, more electric power is required compared to the high battery temperature.

The moving power setting portion 38, defining the threshold value as the lower limit of the power that is retrievable from the battery 11 for the running of the fuel cell vehicle 1, monitors the stored power of the battery 11 using the voltage sensor 112 and sets the threshold value according to the situation of the fuel cell vehicle 1 in order to ensure as much scavenge power as possible.. Moreover, running the vehicle by the stored power driving portion 32 is allowed until the stored power that is detected by the voltage sensor 112 reaches this threshold value.

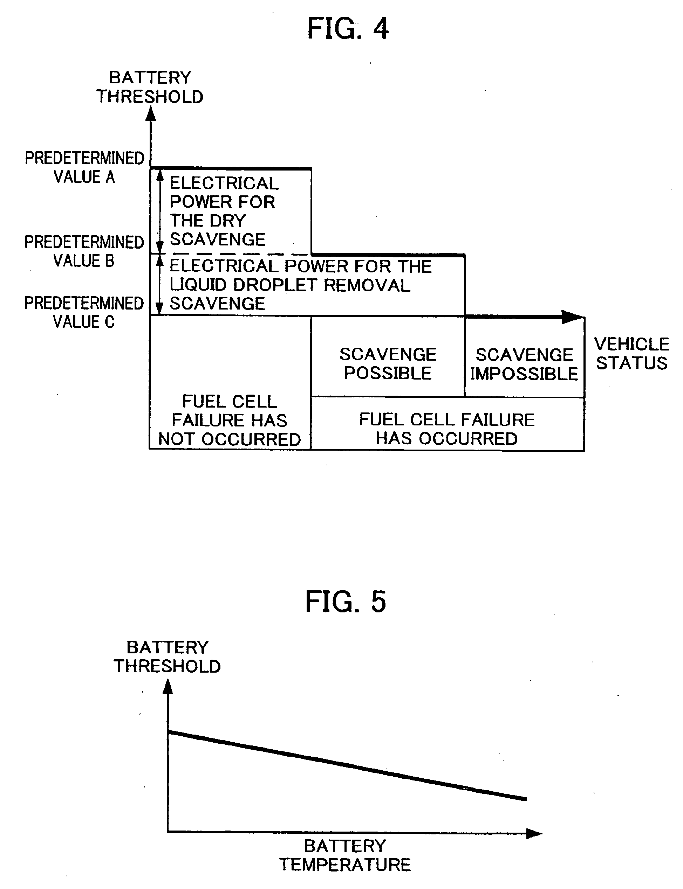

More specifically, the moving power setting portion 38 sets the threshold value according to figure 4.

Figure 4 shows the relation between the status of the fuel cell vehicle 1 and the threshold value of the battery 11.

When there is no fuel cell failure and when the power generation continuation judgment portion 33 has judged that the fuel cell 10 can continue the generation, at least enough electric power is ensured that the liquid droplet removal scavenge portion 34 consumes. In this figure, the predetermined value A is set to be the threshold value in order to ensure the consumption power of the liquid droplet removal scavenge portion 34 and the consumption power of the dry scavenge portion 35.

When fuel cell failure has occurred and the power generation continuation portion 33 has judged that the power generation by the fuel cell 10 cannot be continued, but when the power that will be consumed by the liquid droplet removal scavenge portion 34 can be ensured, the predetermined value B is set to be the threshold value in order to assure only enough power that will be consumed by the liquid droplet removal scavenge portion 34.

When the power generation continuation judgment portion 33 has judged that the generation by the fuel cell 10 cannot be continued and when the consumption power of the liquid droplet removal scavenge portion 34 cannot be assured, the scavenge power will not be ensured and the predetermined value C is set to be the threshold value; here it is 0.

As the retrievable power from the battery 11 varies according to the temperature change of the battery 11, the moving power setting portion 38 can also vary the threshold value of the battery 11 according to figure 5.

Figure 5 shows the relation between the temperature of the battery 11 and the threshold value. In accordance with a battery temperature decrease, the retrievable electric power value from the battery 11 decreases. Therefore, the moving power setting portion 38 varies the threshold value of the battery 11 based on the temperature of the battery 11 detected by the temperature sensor 111.

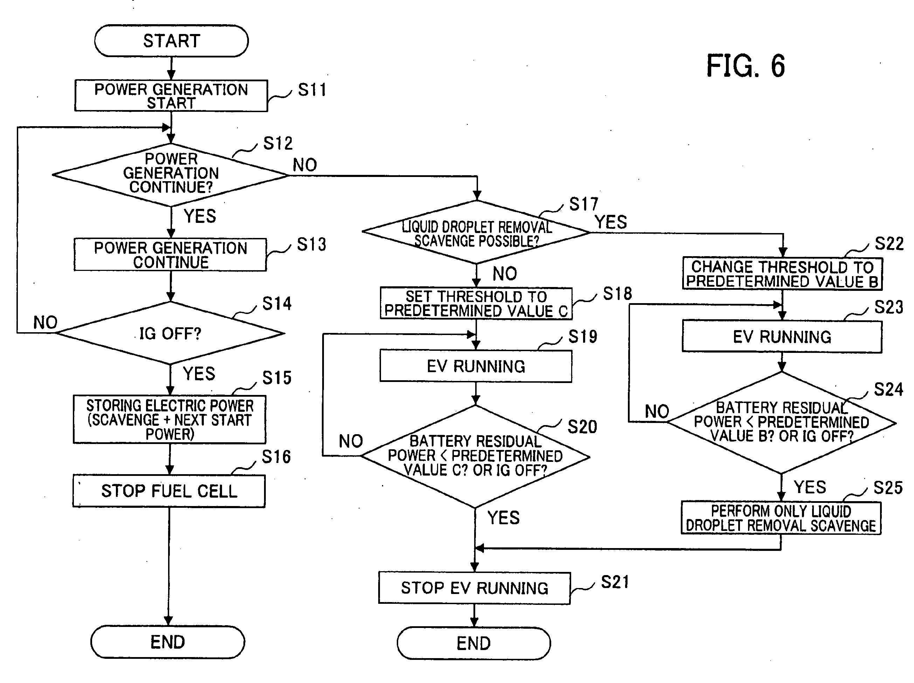

The operation of the fuel cell vehicle 1 is described while referring figure 6.

The fuel cell power driving portion 31 drives the driving motor 2 using the power generated by the fuel cell 10 (S11). In this state, the threshold value of the battery 11 is the predetermined value A.

Then, the possibility of continued power generation by the fuel cell 10 is judged (S12). If this judgment is YES, the power generation by the fuel cell is continued (S13). Afterwards, it is judged whether the ignition is off or not (S14). If this judgment is NO, the step returns to S12, and if YES, the power is stored to perform the scavenge by the liquid droplet removal scavenge portion 34 and the scavenge by the dry scavenge portion 35. In addition, the power is stored to restart the fuel cell 10 the next time (S15) and then the fuel cell 10 is stopped (S16).

On the other hand, when the judgment at S12 is NO, it is judged whether the power for the scavenge by the liquid droplet removal scavenge portion 34 is stored in the battery 11 or not (S17).

In a case where this judgment is NO, the threshold value of the battery 11 is set to be the predetermined value C and the retrievable power from the battery 11 for the running of the fuel cell vehicle is made to be the maximum (S18) and the EV running is performed by the stored power driving portion 32 (S19). Then, it is judged if the remaining electrical power of the battery 11 is equal to or less than the predetermined value C, or if the ignition is turned off or not (S20). When at least one of these 2 judgments is YES, the EV running is finished (S21). On the other hand, when both of these 2 judgments are NO, the step returns to S19.

When the judgment of S17 is YES, the threshold value of the battery 11 is set to be the predetermined value B, thus ensuring the power to scavenge by the liquid droplet removal scavenge portion 34 (S22), and EV running is performed by the stored power driving portion 32 (S23). After that, it is judged if the remaining electrical power of the battery 11 is equal to or less than the predetermined value B, or if the ignition is turned off or not (S24). When at least one of these 2 judgments is YES, the scavenge is performed by the liquid droplet removal scavenge portion 34 (S25) and the step moves to S21. On the other hand, when both of these 2 judgments are NO, the step returns to S23.

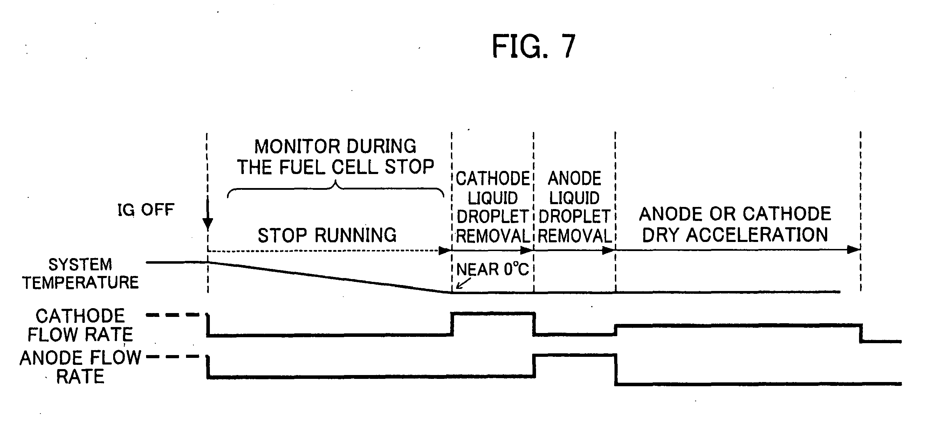

Figure 7 is a timing chart starting from the ignition off until the scavenge completion when fuel cell failure does not occur.

When the ignition is turned off, the vehicle running is stopped and also the fuel cell is stopped. For that reason, the gas flow quantity at the cathode side and the gas flow quantity at anode side decrease.

After that, the temperature of the fuel cell system is monitored. In case the system temperature decreases to 0 degrees centigrade, after the liquid droplet removal scavenge is performed by supplying a large flow rate of air to the cathode side in a short time, the liquid droplet removal scavenge at anode side is performed by supplying large flow rate of air to the anode side in a short time. After that, a small flow rate of air is supplied during a long time to the anode side or the cathode side to dry scavenge the anode side or the cathode side.

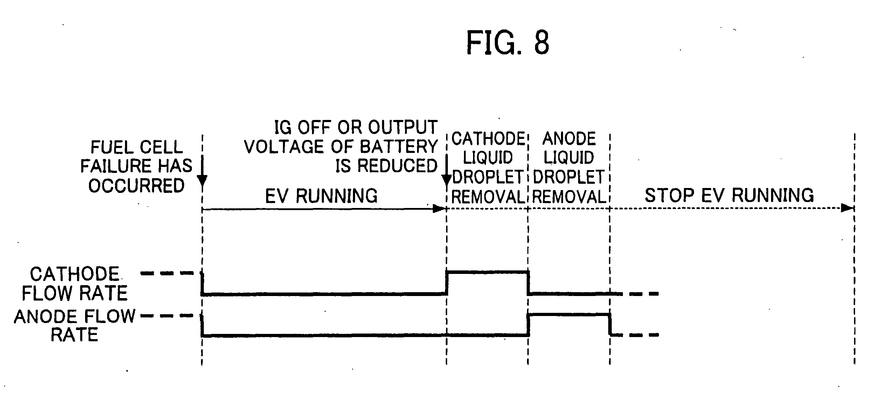

Figure 8 is a timing chart starting from the occurrence of fuel cell failure until the scavenge completion when the fuel cell failure occurred.

When the fuel cell failure occurred, as the running mode is switched to be EV running, the gas flow rate at the cathode side and the gas flow rate of the anode side are decreased.

After that, either when the ignition is turned off or when the battery output decreases, EV running is stopped. In addition, after the liquid droplet removal scavenge at cathode side is performed by supplying a large flow rate of air to the cathode side in a short time , and then the liquid droplet removal scavenge at anode side is performed by supplying a large flow rate of air to the anode side in a short time. After that, the dry scavenge is not performed.

According to the embodiment of the present invention, there are the following effects.
(1) When the continuation of the power generation of the fuel cell 10 is judged to be possible, the scavenge is performed by the liquid droplet removal scavenge portion 34 and the dry scavenge portion 35. On the other hand, when the continuation of power generation of the fuel cell 10 is judged to be impossible because of the occurrence of fuel cell failure, the scavenge is performed by the liquid droplet removal scavenge portion 34. Accordingly, when fuel cell failure has occurred, since the power otherwise used for the dry scavenge portion 35 is used for the running of the fuel cell vehicle 1, the traveling distance by EV running using the battery 11 can be extended.
(2) During the running period of the fuel cell vehicle 1, at least the necessary scavenge power for the liquid droplet removal scavenge is ensured so that the scavenge can be performed even when fuel cell failure has occurred.
(3) As EV running by the battery 11 is allowed until the stored electrical power that is detected by the voltage sensor 112 reaches the threshold value, the fuel cell vehicle 1 can be run as long a distance as possible by ensuring the necessary power for scavenge after finishing EV running.
   The second embodiment
   In this embodiment, the threshold value is changed based on the battery temperature in the operation of the fuel cell vehicle 1, which is a point that differs from the first embodiment.

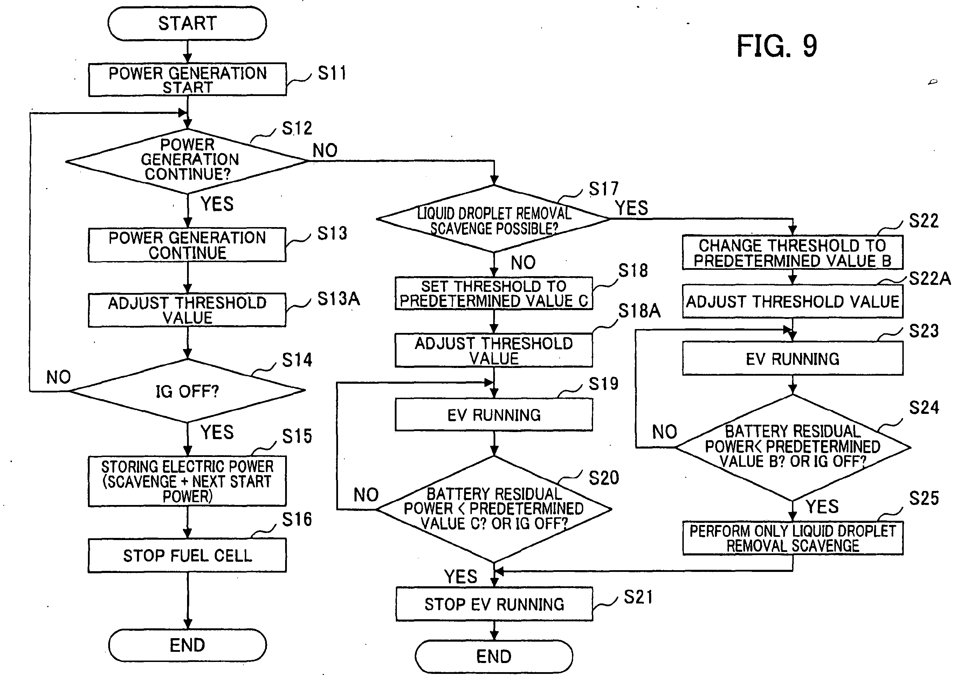

   Figure 9 shows a flow chart of a fuel cell vehicle 1 related to the second embodiment of the present invention.
   More specifically, in the flow chart of Figure 9, S13A is provided between S13 and S14, S18A is provided between S18 and S19, and S22A is provided between S22 and S23, which are points that differ from the flow chart of the Figure 6.
   In S13A, S18A and S22A, the moving power setting portion 38 varies the threshold value of the battery 11 based on the temperature of the battery 11 that is detected by the temperature sensor 111.
   According to the embodiment of the present invention, there are the following effects in addition to above described effects (1) to (3).
(4) As the threshold value is changed based on the temperature of the battery 11 as detected by the temperature sensor 111, for example, the stored power can be utilized effectively by setting the threshold value to be low when the temperature of the battery 11 is low.
   The third embodiment

In this embodiment of the present invention, when the continued generation by the fuel cell 10 is impossible, the liquid droplet removal scavenge starts immediately, which is a point that differs from the first embodiment of the present invention.

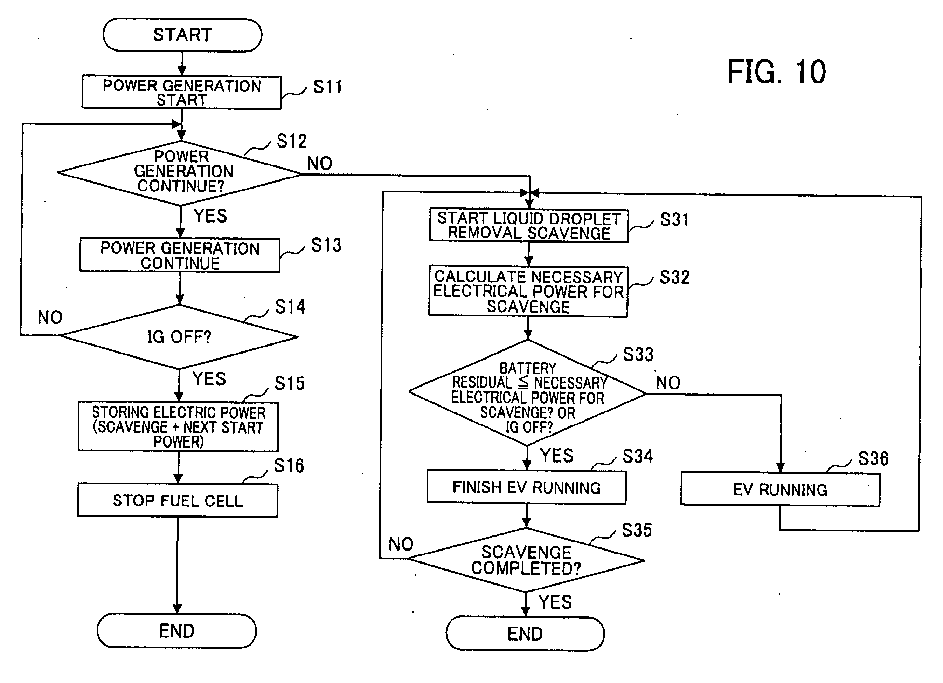

Figure 10 shows a flow chart of a fuel cell vehicle 1 related to the third embodiment of the present invention.

More specifically, in the flow chart of Figure 10, the steps S11 to S16 are the same steps as those of the first embodiment, but the steps S31 to S36 differ from those of the first embodiment.

Specifically, when the judgment of S12 is NO, the scavenge control portion 36 immediately starts the scavenge by the liquid droplet removal scavenge portion 34 (S31) and the scavenge power calculation portion 37 calculates the necessary electric power to complete the scavenge (scavenge necessary electric power) (S32). Then, it is judged whether the remaining electrical power of the battery 11 is equal to or less than the scavenge necessary electric power, or if the ignition is turned off or not (S33).

When at least either one of these 2 judgments is YES, EV running is finished (S21) and the scavenge control portion 36 judges whether the scavenge is completed or not (S35). When this judgment is YES, all processes are finished, and if it is NO, the process returns to S31.

On the other hand, when both of these 2 judgments are NO, EV running is performed (S36) and the process returns to S31.

According to this third embodiment of the present invention, there are the same effects with that of the above described (1) and (2).

The present invention is not limited by the embodiments, and modifications and improvements within the scope to achieve the object of the present invention are included in the present invention.

For example, in the embodiment, the anode side liquid droplet removal scavenge is performed after the cathode side liquid droplet removal scavenge, but the order is not limited and either side scavenge can be performed first.

In addition, in the embodiment, the battery 11 is used as the power storage means, but the power storage means is not limited and a capacitor can be used.
To provide a fuel cell moving body that can extend travel distance by the battery when fuel cell failure has occurred.
A fuel cell vehicle 1 includes a fuel cell 10, a battery 11 and a control device 30. The control device 30 includes a liquid droplet removal scavenge portion 34 and a dry scavenge portion 35. The control device 30 judges whether power generation continuation of the fuel cell 10 is possible during the running. When the continued power generation is judged to be possible, the power generation continues, and after running, the liquid droplet removal scavenge portion 34 and the dry scavenge portion 35 perform the scavenge. When continued power generation is judged to be impossible, power generation is stopped, the fuel cell vehicle is run by the battery 11 and the liquid droplet removal scavenge portion 34 performs scavenge.

## Claims

1. A moving apparatus comprising a moving body that is movable by driving a driving means;
a fuel cell that generates electric power by reacting reactant gas;
a power storage means for storing the electric power; and
a control means for controlling the moving body, the fuel cell and the power storage means,
the control means comprises a fuel cell driving means for driving the driving means by the electric power that is generated by the fuel cell;
a stored power driving means for driving the driving means using stored power, the stored power being at least one portion of generated electric power by the fuel cell stored in the power storage means;
a power generation continuation judgment means for judging whether power generation continuation by the fuel cell is possible or not;
a liquid droplet removal scavenge means for removing a liquid droplet in a reactant gas flow channel by circulating scavenge gas in the reactant gas flow channel; and
a dry scavenge means for drying the reactant gas flow channel by circulating the scavenge gas in the reactant gas flow channel,
wherein, during the period of moving of the moving body by the fuel cell driving means, the power generation continuation judgment means judges whether the power generation continuation of the fuel cell is possible or not, and in a case where the power generation continuation of the fuel cell is judged to be possible, the fuel cell continues power generation, and after finishing the moving of the moving body, a scavenge is performed by the liquid droplet removal scavenge means and the dry scavenge means, and in a case where the power generation continuation of the fuel cell is judged to be impossible, the power generation by the fuel cell is stopped and the moving body is moved by the stored power driving means and the scavenge is performed by the liquid droplet removal scavenge means.

2. The moving apparatus according to claim 1,
further comprising a stored power detection means for detecting an amount of the stored power of the storage means,
the control means further comprises a scavenge power calculation means for calculating necessary electric power for operating the liquid droplet removal scavenge means,
wherein by setting a threshold value to be the lower limit of the electric power that is retrievable from the power storage means for the moving of the moving body,
based on the amount of stored power that is detected by the stored power detection means and on the scavenge power, the threshold value is set in order to ensure the necessary electric power for operating at least the liquid droplet removal scavenge means during a period of moving the moving body.

3. The moving apparatus according to claim 2,
further comprising a temperature detection means for detecting a temperature of the storage means,
wherein the control means changes the threshold value based on the temperature that is detected by the temperature detection means.

4. The moving apparatus according to claim 2 or 3,
wherein the control means allows the moving of the moving body by way of the stored power driving means until the stored power that is detected by the stored power detection means reaches the threshold value.

5. The moving apparatus according to claim 1,
wherein the liquid droplet removal scavenge means and the dry scavenge means operate using air that is supplied from an air compressor.

6. The moving apparatus according to claim 1,
wherein the power generation by the fuel cell is continued as the power generation continuation judgment means judges that the power generation continuation of the fuel cell is possible, and in a case where the scavenge by the liquid droplet removal means and the dry scavenge means is performed after finishing the moving of the moving body, the dry scavenge means operates after operating the liquid droplet removal scavenge means.

7. The moving apparatus according to claim 1,
wherein the fuel cell has an anode and a cathode, and
the liquid droplet removal scavenge means performs the scavenge of the anode side and cathode side of the fuel cell.

8. A control method of a moving apparatus having:
a moving body that is movable by driving a driving means;
a fuel cell that generates electric power by reacting a reactant gas; and
a power storage means for storing the electric power,
wherein generated electric power of the fuel cell drives the driving means, at least a portion of the generated electric power of the fuel cell is stored in the power storage means, and stored power drives the driving means,
the control method comprising steps of:
judging whether power generation continuation of the fuel cell is possible or not, during a period of moving of the moving body by way of the generated electric power by the fuel cell;
continuing power generation by the fuel cell, and after finishing the moving of the moving body, circulating scavenge gas in a reactant gas flow channel so as to perform liquid droplet removal scavenge to remove a liquid droplet from the reactant gas flow channel, and circulating the scavenge gas in the reactant gas flow channel so as to perform dry scavenge to dry the reactant gas flow channel, in a case where the power generation continuation of the fuel cell is judged possible;
stopping the power generation by the fuel cell and moving the moving body by the stored power in the power storage means, and performing the liquid droplet removal scavenge, in a case where the power generation continuation of the fuel cell is judged impossible.

9. The control method of the moving apparatus according to claim 8, further comprising steps of:
detecting an amount of the stored power in the power storage means,
calculating scavenge power necessary to perform the liquid droplet removal scavenge,
setting a threshold value to be the lower limit of electric power that is retrievable from the power storage means for the moving of the moving body,
setting the threshold value in order to ensure necessary electric power to perform the liquid droplet removal scavenge during the period of moving the moving body, based on the amount of the stored power detected and on the scavenge power.

10. The control method of the moving apparatus according to claim 9,
wherein a temperature of the storage power means is detected, and the threshold value is changed based on the temperature that is detected.

11. The control method of the moving apparatus according to claim 9 or 10,
wherein the moving of the moving body by electric power stored in the storage power means is allowed until the amount of stored power detected reaches the threshold value.

12. The control method of the moving apparatus according to claim 8,
wherein the liquid droplet removal scavenge and the dry scavenge are performed using air that is supplied by an air compressor.

13. The control method of the moving apparatus according to claim 8,
wherein the power generation by the fuel cell is continued as the power generation continuation of the fuel cell is judged to be possible, and in a case where the liquid droplet removal scavenge and the dry scavenge are performed after finishing the moving of the moving body, the dry scavenge is performed after performing the liquid droplet removal scavenge.

14. The control method of the moving apparatus according to claim 8,
wherein the fuel cell has an anode and a cathode,
in the liquid droplet removal scavenge, scavenge at an anode side and a cathode side of the fuel cell is performed.

## Patentansprüche

1. Bewegliche Vorrichtung, die einen beweglichen Körper aufweist, der durch Antrieb eines Antriebsmittels bewegbar ist;
eine Brennstoffzelle, die durch Reaktion von Reaktionsgas elektrische Energie erzeugt;
ein Stromspeichermittel zum Speichern der elektrischen Energie; und
ein Steuerungsmittel zum Steuern/Regeln des beweglichen Körpers, der Brennstoffzelle und des Stromspeichermittels,
wobei das Steuerungsmittel ein Brennstoffzellenantriebsmittel umfasst, um das Antriebsmittel mit der von der Brennstoffzelle erzeugten elektrischen Energie anzutreiben;
ein Speicherstromantriebsmittel zum Betreiben des Antriebsmittels unter Verwendung der gespeicherten Energie, wobei die gespeicherte Energie zumindest ein Teil der von der Brennstoffzelle erzeugten elektrischen Energie ist, die in dem Stromspeichermittel gespeichert ist;
ein Stromerzeugungsfortsetzungsbewertungsmittel zum Bewerten, ob die Fortsetzung der Stromerzeugung durch die Brennstoffzelle möglich ist oder nicht;
ein Flüssigkeitstropfenentfernungsspülmittel zum Entfernen eines Flüssigkeitstropfens in einem Reaktionsgasströmungskanal durch Umwälzen von Spülgas in dem Reaktionsgasströmungskanal; und
ein Trockenspülmittel zum Trocknen des Reaktionsgasströmungskanals durch Umwälzen des Spülgases in dem Reaktionsgasströmungskanal, worin, während der Bewegungsdauer des beweglichen Körpers durch das Brennstoffzellenantriebsmittel, das Stromerzeugungsfortsetzungsbewertungsmittel wertet, ob die Stromerzeugungsfortsetzung der Brennstoffzelle möglich ist oder nicht, und in einem Fall, wo die Stromerzeugungsfortsetzung der Brennstoffzelle als möglich gewertet wird, die Brennstoffzelle die Stromerzeugung fortsetzt, und nach Beendigung der Bewegung des beweglichen Körpers eine Spülung durch das Flüssigkeitstropfenentfernungsspülmittel und das Trockenspülmittel durchgeführt wird, und in einem Fall, wo die Stromerzeugungsfortsetzung der Brennstoffzelle als unmöglich gewertet wird, die Stromerzeugung der Brennstoffzelle gestoppt wird und der bewegliche Körper durch das Speicherstromantriebsmittel bewegt wird und die Spülung durch das Flüssigkeitstropfenentfernungsspülmittel durchgeführt wird.

2. Bewegliche Vorrichtung nach Anspruch 1, die ferner ein Speicherstromerfassungsmittel aufweist, um eine Menge des gespeicherten Stroms des Speichermittels zu erfassen;
wobei das Steuerungsmittel ferner ein Spülenergieberechnungsmittel aufweist, um die erforderliche elektrische Energie zu berechnen, um das Flüssigkeitstropfenentfernungsspülmittel zu betreiben,
worin durch Setzen eines Schwellenwerts als die Untergrenze der elektrischen Energie, die von dem Stromspeichermittel zum Bewegen des beweglichen Körpers abrufbar ist, basierend auf der Menge der elektrischen Energie, die von dem Speicherstromerfassungsmittel erfasst wird, und der Spülenergie, der Schwellenwert so gesetzt wird, dass die erforderliche elektrische Energie sichergestellt wird, um während der Bewegungsdauer des beweglichen Körpers zumindest das Flüssigkeitstropfenentfernungsspülmittel zu betreiben.

3. Bewegliche Vorrichtung nach Anspruch 2, die ferner ein Temperaturerfassungsmittel zum Erfassen einer Temperatur des Speichermittels aufweist, worin das Steuerungsmittel den Schwellenwert basierend auf der Temperatur, die von dem Temperaturerfassungsmittel erfasst wird, ändert.

4. Bewegliche Vorrichtung nach Anspruch 2 oder 3, worin das Steuerungsmittel die Bewegung des beweglichen Körpers mittels des Speicherstromantriebsmittels erlaubt, bis die gespeicherte Energie, die von dem Speicherstromerfassungsmittel erfasst wird, den Schwellenwert erreicht.

5. Bewegliche Vorrichtung nach Anspruch 1, worin das Flüssigkeitstropfenentfernungsspülmittel und das Trockenspülmittel unter Verwendung von Luft arbeiten, die von einem Luftkompressor zugeführt wird.

6. Bewegliche Vorrichtung nach Anspruch 1, worin die Stromerzeugung durch die Brennstoffzelle fortgesetzt wird, wenn das Stromerzeugungsfortsetzungsbewertungsmittel wertet, dass die Stromerzeugungsfortsetzung der Brennstoffzelle möglich ist, und in einem Fall, wo die Spülung durch das Flüssigkeitstropfenentfernungsmittel und das Trockenspülmittel nach Beendigung der Bewegung des beweglichen Körpers durchgeführt wird, das Trockenspülmittel nach dem Betrieb des Flüssigkeitstropfen-Entfernungsmittels arbeitet.

7. Bewegliche Vorrichtung nach Anspruch 1, worin die Brennstoffzelle eine Anode und eine Kathode aufweist, und das Flüssigkeitstropfenentfernungsspülmittel die Spülung der Anodenseite und der Kathodenseite der Brennstoffzelle durchführt.

8. Steuerungsverfahren einer beweglichen Vorrichtung, die:
einen beweglichen Körper, der durch Antrieb eines Antriebsmittels beweglich ist;
eine Brennstoffzelle, die durch Reaktion von Reaktionsgas elektrische Energie erzeugt; und
ein Stromspeichermittel zum Speichern der elektrischen Energie aufweist;
worin die erzeugte elektrische Energie der Brennstoffzelle das Antriebsmittel antreibt, wobei zumindest ein Teil der von der Brennstoffzelle erzeugten elektrischen Energie in dem Stromspeichermittel gespeichert wird und der gespeicherte Strom das Antriebsmittel antreibt,
wobei das Steuerungsverfahren die Schritte umfasst:
Bewerten, ob eine Fortsetzung der Stromerzeugung der Brennstoffzelle möglich ist oder nicht, während einer Bewegungsdauer des beweglichen Körpers durch die von der Brennstoffzelle erzeugte elektrische Energie;
Fortsetzen der Stromerzeugung durch die Brennstoffzelle, und nach Beendigung der Bewegung des beweglichen Körpers, Umwälzen von Spülgas in einem Reaktionsgasströmungskanal, um eine Flüssigkeitstropfenentfernungsspülung auszuführen, um einen Flüssigkeitstropfen aus dem Reaktionsgasströmungskanal zu entfernen, und Umwälzen des Spülgases in dem Reaktionsgasströmungskanal, um eine Trockenspülung auszuführen, um den Reaktionsgasströmungskanal zu trocknen, in einem Fall, wo die Stromerzeugungsfortsetzung der Brennstoffzelle als möglich gewertet wird;
Stoppen der Stromerzeugung durch die Brennstoffzelle und Bewegen des beweglichen Körpers durch die in dem Stromspeichermittel gespeicherte Energie, und Durchführen der Flüssigkeitstropfenentfernungsspülung, in einem Fall, wo die Stromerzeugungsfortsetzung der Brennstoffzelle als unmöglich gewertet wird.

9. Steuerungsverfahren der beweglichen Vorrichtung nach Anspruch 8, das ferner die Schritte umfasst:
Erfassen einer Menge der in dem Stromspeichermittel gespeicherten Energie;
Berechnen der Spülenergie, die erforderlich ist, um die Flüssigkeitstropfenentfernungsspülung durchzuführen,
Setzen eines Schwellenwerts als Untergrenze der elektrischen Energie, die von dem Stromspeichermittel zum Bewegen des beweglichen Körpers abrufbar ist,
Setzen des Schwellenwerts, um die erforderliche elektrische Energie sicherzustellen, um die Flüssigkeitstropfenentfernungsspülung während der Bewegungsdauer des beweglichen Körpers durchzuführen, basierend auf der erfassten Menge der gespeicherten Energie und der Spülenergie.

10. Steuerungsverfahren der beweglichen Vorrichtung nach Anspruch 9, worin eine Temperatur des Stromspeichermittels erfasst wird und der Schwellenwert basierend auf der erfassten Temperatur geändert wird.

11. Steuerungsverfahren der beweglichen Vorrichtung nach Anspruch 9 oder 10, worin die Bewegung des beweglichen Körpers durch die im Stromspeichermittel gespeicherte elektrische Energie erlaubt wird, bis die Menge der erfassten gespeicherten Energie den Schwellenwert erreicht.

12. Steuerungsverfahren der beweglichen Vorrichtung nach Anspruch 8, worin die Flüssigkeitstropfenentfernungsspülung und die Trockenspülung unter Verwendung von Luft durchgeführt werden, die von einem Luftkompressor zugeführt wird.

13. Steuerungsverfahren der beweglichen Vorrichtung nach Anspruch 8, worin die Stromerzeugung durch die Brennstoffzelle fortgesetzt wird, wenn die Stromerzeugungsfortsetzung der Brennstoffzelle als möglich gewertet wird, und in einem Fall, wo die Flüssigkeitstropfenentfernungsspülung und die Trockenspülung nach Beendigung der Bewegung des beweglichen Körpers durchgeführt werden, die Trockenspülung nach der Durchführung der Flüssigkeitstropfenentfernungsspülung durchgeführt wird.

14. Steuerungsverfahren der beweglichen Vorrichtung nach Anspruch 8, worin die Brennstoffzelle eine Anode und eine Kathode aufweist, und in der Flüssigkeitstropfenentfernungsspülung die Spülung an einer Anodenseite und einer Kathodenseite der Brennstoffzelle ausgeführt wird.

## Revendications

1. Dispositif mobile comprenant un corps mobile qui peut être déplacé par la commande de moyens d'entraînement ;
une pile à combustible qui génère une énergie électrique par la réaction d'un gaz réactif ;
des moyens d'accumulation d'énergie pour accumuler l'énergie électrique ; et
des moyens de commande pour commander le corps mobile, la pile à combustible et les moyens d'accumulation d'énergie,
les moyens de commande comprennent des moyens d'entraînement de pile à combustible pour commander les moyens d'entraînement par l'énergie électrique qui est générée par la pile à combustible ;
des moyens d'entraînement d'énergie accumulée pour commander les moyens d'entraînement en utilisant une énergie accumulée, l'énergie accumulée étant au moins une partie de l'énergie électrique générée par la pile à combustible accumulée dans les moyens d'accumulation d'énergie ;
des moyens de jugement de poursuite de génération d'énergie pour juger si la poursuite de la génération d'énergie par la pile à combustible est possible ou non ;
des moyens de balayage de retrait de gouttelette de liquide pour retirer une gouttelette de liquide d'un canal d'écoulement de gaz réactif en faisant circuler un gaz de balayage dans le canal d'écoulement de gaz réactif ; et
des moyens de balayage de séchage pour sécher le canal d'écoulement de gaz réactif en faisant circuler le gaz de balayage dans le canal d'écoulement de gaz réactif,
dans lequel, pendant la période de déplacement du corps mobile par les moyens d'entraînement de pile à combustible, les moyens de jugement de poursuite de génération d'énergie jugent si la poursuite de la génération d'énergie par la pile à combustible est possible ou non, et dans un cas dans lequel il est jugé qu'il est possible de poursuivre la génération d'énergie par la pile à combustible, la pile à combustible poursuit la génération d'énergie, et à la fin du déplacement du corps mobile, un balayage est effectué par les moyens de balayage de retrait de gouttelette de liquide et les moyens de balayage de séchage, et dans un cas dans lequel il est jugé que la poursuite de la génération d'énergie par la pile à combustible est impossible, la génération d'énergie par la pile à combustible est arrêtée et le corps mobile est déplacé par les moyens d'entraînement d'énergie accumulée et le balayage est effectué par les moyens de balayage de retrait de gouttelette de liquide.

2. Dispositif mobile selon la revendication 1,
comprenant en outre des moyens de détection d'énergie accumulée pour détecter une quantité d'énergie accumulée des moyens d'accumulation,
les moyens de commande comprennent en outre des moyens de calcul d'énergie de balayage pour calculer une énergie électrique nécessaire au fonctionnement des moyens de balayage de retrait de gouttelette de liquide,
dans lequel, en fixant une valeur de seuil de sorte qu'elle soit la limite inférieure de l'énergie électrique qui peut être récupérée dans les moyens de stockage d'énergie pour le déplacement du corps mobile,
sur la base de la quantité d'énergie accumulée qui est détectée par les moyens de détection d'énergie accumulée et de l'énergie de balayage, la valeur de seuil est fixée afin de garantir l'énergie électrique nécessaire au fonctionnement au moins des moyens de balayage de retrait de gouttelette de liquide pendant une période de déplacement du corps mobile.

3. Dispositif mobile selon la revendication 2,
comprenant en outre des moyens de détection de température pour détecter une température des moyens d'accumulation,
dans lequel les moyens de commande modifient la valeur de seuil sur la base de la température détectée par les moyens de détection de température.

4. Dispositif mobile selon la revendication 2 ou 3,
dans lequel les moyens de commande permettent le déplacement du corps mobile au moyen des moyens d'entraînement d'énergie accumulée jusqu'à ce que l'énergie accumulée détectée par les moyens de détection d'énergie accumulée atteigne la valeur de seuil.

5. Dispositif mobile selon la revendication 1,
dans lequel les moyens de balayage de retrait de gouttelette de liquide et les moyens de balayage de séchage fonctionnent en utilisant l'air qui est délivré par un compresseur d'air.

6. Dispositif mobile selon la revendication 1,
dans lequel la génération d'énergie par la pile à combustible est poursuivie alors que les moyens de jugement de poursuite de génération d'énergie jugent que la poursuite de la génération d'énergie par la pile à combustible est possible, et dans un cas dans lequel le balayage par les moyens de retrait de gouttelette de liquide et les moyens de balayage de séchage est effectué à la fin du déplacement du corps mobile, les moyens de balayage de séchage fonctionnent après le fonctionnement des moyens de balayage de retrait de gouttelette de liquide.

7. Dispositif mobile selon la revendication 1,
dans lequel la pile à combustible comporte une anode et une cathode, et
les moyens de balayage de retrait de gouttelette de liquide effectuent le balayage du côté anode et du côté cathode de la pile à combustible.

8. Procédé de commande d'un dispositif mobile comportant :
un corps mobile qui peut être déplacé par la commande de moyens d'entraînement ;
une pile à combustible qui génère une énergie électrique par la réaction d'un gaz réactif ; et
des moyens d'accumulation d'énergie pour accumuler l'énergie électrique,
dans lequel l'énergie électrique générée par la pile à combustible commande les moyens d'entraînement, au moins une partie de l'énergie électrique générée par la pile à combustible est accumulée dans les moyens d'accumulation d'énergie, et l'énergie accumulée commande les moyens d'entraînement,
le procédé de commande comprenant les étapes consistant à :
juger si la poursuite de la génération d'énergie par la pile à combustible est possible ou non, pendant une période de déplacement du corps mobile au moyen de l'énergie électrique générée par la pile à combustible ;
poursuivre la génération d'énergie par la pile à combustible, et à la fin du déplacement du corps mobile, faire circuler un gaz de balayage dans un canal d'écoulement de gaz réactif de manière à effectuer un balayage de retrait de gouttelette de liquide pour retirer une gouttelette de liquide du canal d'écoulement de gaz réactif, et faire circuler le gaz de balayage dans le canal d'écoulement de gaz réactif de manière à effectuer un balayage de séchage pour sécher le canal d'écoulement de gaz réactif, dans un cas dans lequel la poursuite de la génération d'énergie par la pile à combustible est jugée possible ;
arrêter la génération d'énergie par la pile à combustible et déplacer le corps mobile par l'énergie accumulée dans les moyens d'accumulation d'énergie, et effectuer un balayage de retrait de gouttelette de liquide, dans un cas dans lequel la poursuite de la génération d'énergie par la pile à combustible est jugée impossible.

9. Procédé de commande du dispositif mobile selon la revendication 8, comprenant en outre les étapes consistant à :
détecter une quantité de l'énergie accumulée dans les moyens d'accumulation d'énergie ;
calculer une énergie de balayage nécessaire pour effectuer un balayage de retrait de gouttelette de liquide ;
fixer une valeur de seuil de sorte qu'elle soit la limite inférieure de l'énergie électrique qui peut être récupérée dans les moyens d'accumulation d'énergie pour le déplacement du corps mobile ;
fixer la valeur de seuil afin de garantir l'énergie électrique nécessaire pour effectuer le balayage de retrait de gouttelette de liquide pendant la période de déplacement du corps mobile, sur la base de la quantité d'énergie accumulée détectée et de l'énergie de balayage.

10. Procédé de commande du dispositif mobile selon la revendication 9,
dans lequel une température des moyens d'accumulation d'énergie est détectée, et la valeur de seuil est modifiée sur la base de la température détectée.

11. Procédé de commande du dispositif mobile selon la revendication 9 ou 10,
dans lequel le déplacement du corps mobile par l'énergie électrique accumulée dans les moyens d'accumulation d'énergie est permis jusqu'à ce que la quantité d'énergie accumulée détectée atteigne la valeur de seuil.

12. Procédé de commande du dispositif mobile selon la revendication 8,
dans lequel le balayage de retrait de gouttelette de liquide et le balayage de séchage sont effectués en utilisant l'air qui est délivré par un compresseur d'air.

13. Procédé de commande du dispositif mobile selon la revendication 8,
dans lequel la génération d'énergie par la pile à combustible est poursuivie alors que la poursuite de génération d'énergie par la pile à combustible est jugée comme étant possible, et dans un cas dans lequel le balayage de retrait de gouttelette de liquide et le balayage de séchage sont effectués à la fin du déplacement du corps mobile, le balayage de séchage est effectué après avoir effectué le balayage de retrait de gouttelette de liquide.

14. Procédé de commande du dispositif mobile selon la revendication 8,
dans lequel la pile à combustible a une anode et une cathode,
dans le balayage de retrait de gouttelette de liquide, le balayage du côté anode et du côté cathode de la pile à combustible est effectué.
